# EUROPÄISCHE PATENTSCHRIFT

(11) **EP 1 019 260 B1**
(45) Veröffentlichungstag und Bekanntmachung des Hinweises auf die Patenterteilung: **06.02.2002**
(21) Anmeldenummer: 98944974.9
(22) Anmeldetag: 09.07.1998
(51) Int. Cl.: B60K 35/00, G01D 7/04

(54) **MESSWERK, INSBESONDERE FÜR ANZEIGEEINRICHTUNGEN IN DER KFZ-TECHNIK**
MEASURING SYSTEM, ESPECIALLY FOR DISPLAY DEVICES IN THE AUTOMOBILE TECHNOLOGY
SYSTEME DE MESURE, NOTAMMENT POUR DISPOSITIFS D'AFFICHAGE EN TECHNIQUE AUTOMOBILE

(30) Priorität: 02.10.1997 DE 19743784
(43) Veröffentlichungstag der Anmeldung: 19.07.2000
(73) Patentinhaber: TRW Automotive Electronics & Components GmbH & Co. KG, 78315 Radolfzell (DE)
(72) Erfinder: SAUTER, Roland, D-78056 Villingen-Schwenningen (DE)
(74) Vertreter: Eder, Thomas, Dr.-Ing.
(86) Internationale Anmeldenummer: DE9801912
(87) Internationale Veröffentlichungsnummer: WO9917949

(56) Entgegenhaltungen:
- DE-A- 3 906 721
- DE-U- 29 715 340
- US-A- 4 170 132

## Beschreibung

Die Erfindung betrifft ein Messwerk, insbesondere für Anzeigeeinrichtungen in der KFZ-Technik.

In der KFZ-Technik finden für die Anzeige interessierender Parameter, beispielsweise der Fahrzeuggeschwindigkeit, der Motordrehzahl, des Füllgrads des Tanks oder dergleichen, häufig analoge Anzeigeinstrumente Verwendung. Bei derartigen Anzeigeinstrumenten wird ein mittels eines beliebigen Antriebs, beispielsweise mittels einer Drehspule oder eines Schrittmotors, bewegbarer Zeiger über eine entsprechende Skala bewegt, auf welcher der interessierende Wertebereich des anzuzeigenden Parameters aufgetragen ist.

Bei bekannten Anzeigeeinrichtungen wird für jede einzelne Anzeige bzw. für jeden einzelnen Parameter ein separates Messwerk verwendet, welches Anschlusskontakte für das Zuführen der den betreffenden Parametern entsprechenden Signale sowie einen in einem Gehäuse des Messwerks vorgesehenen Antrieb mit einer Abtriebswelle aufweist. Die Abtriebswelle ist mit dem zu bewegenden Zeiger verbindbar.

Insbesondere bei Kombiinstrumenten ergibt sich daher häufig das Problem, die erforderliche Anzahl von Messwerken auf der Platine bzw. im Gehäuse des Kombiinstruments zu platzieren. Häufig wird gefordert, dass die Analoganzeigen so nahe benachbart sind, dass mit üblichen Mitteln die Messwerke infolge der Ausdehnung der Messwerkgehäuse nicht in der gewünschten Weise platzierbar sind.

Als Lösung bietet sich zwar an, zwei oder mehrere Messwerke mit den entsprechenden Antrieben in einem einzigen Gehäuse vorzusehen oder die Übertragung auf die Welle des zu bewegenden Zeigers mittels eines Getriebes vorzunehmen, welches eine entferntere Anordnung des betreffenden Messwerks bzw. Antriebs ermöglicht. Beide Lösungen sind jedoch aufwendig und daher nicht mit dem gewünschten geringen Kostenaufwand realisierbar.

Aus der DE 39 06 721 A1 (Oberbegriff des Anspruchs 1), der US 4,170,132 und der DE 20 59 474 B2 sind jeweils ein Zeigerinstrument bzw. ein Drehmomentanzeiger bekannt, bei welchen zur Vermeidung der vorgenannten Nachteile jeweils zwei Messwerke vorgesehen sind, deren Abtriebswellen sich koaxial durchgreifen. An den Enden der Abtriebswellen ist jeweils ein Zeiger befestigt. Bei beiden Instrumenten sind die Messwerke nebeneinander in einem gemeinsamen Gehäuse angeordnet.

Hierdurch ergibt sich eine flache, in radialer Richtung jedoch ausgedehnte Bauweise. Zudem erfordert die Montage eines derartigen Doppelinstruments mit einer Vielzahl von Einzelteilen in einem gemeinsamen Gehäuse einen relativ hohen Aufwand.

Des Weiteren ist aus der EP 0 194 437 A1 eine Anzeigevorrichtung bekannt, welche zwei Messwerke aufweist, die koaxial zueinander je auf einer Seite einer Skalenscheibe angeordnet sind; die die Zeiger tragenden Enden der Zeigerachsen sind dabei einander zugewandt. Allerdings verbietet sich in vielen Anwendungsfällen das Anordnen eines Messwerks auf der Betrachterseite eines Instruments.

Ausgehend von diesem Stand der Technik liegt der Erfindung die Aufgabe zugrunde, ein Messwerk, insbesondere für Anzeigeeinrichtungen in der KFZ-Technik, zu schaffen, welches die Darstellung wenigstens zweier Parameter ermöglicht, welches mit geringem Aufwand realisierbar und flexibel an die jeweiligen Erfordernisse anpassbar ist.

Die Erfindung löst diese Aufgabe mit den Merkmalen des Patentanspruchs 1.

Die Erfindung geht von der Erkenntnis aus, dass durch die an sich bekannte koaxiale Anordnung zweier Abtriebswellen zweier jeweils unabhängig ansteuerbarer Antriebe eine analoge Anzeige für wenigstens zwei Parameter mit äußerst geringem Platzbedarf, sowohl hinsichtlich der Anzeigeelemente bzw, der Skalen der Anzeige als auch hinsichtlich des Messwerks realisierbar ist. Das Messwerk nach der Erfindung weist wenigstens zwei separate Gehäuse auf, in welchen jeweils ein Antrieb mit einer Abtriebswelle vorgesehen ist Nach der Montage dieser Einzelmesswerke zu dem gesamten Messwerk wird die als Hohlwelle ausgebildete Abtriebswelle des ersten Einzelmesswerks von der Abtriebswelle des zweiten Einzelmesswerks durchgriffen, wobei die Einzelmesswerke zu einem gesamten Messwerk verbunden sind. Hierdurch ergibt sich eine sehr einfache Montage und eine hohe Flexibilität bei der Anpassung des gesarnten Messwerks für unterschiedliche Einsatzfälle.

Die beiden Einzelmesswerke sind dabei in vorteilhafter Weise praktisch identisch ausgebildet, abgesehen von den Abtriebswellen und ggf. hiervon beeinflusster Teile oder Bereiche. Dies führt in der industriellen Fertigung bei hoher Stückzahl zu einer gravierenden Kostenersparnis.

Bei der bevorzugten Ausführungsform der Erfindung ist am Gehäuse des zweiten Einzelmesswerks eine mit dem Gehäuse verbundene Führungshülse für die Abtriebswelle vorgesehen. Diese gewährleistet zum einen eine Führung der Abtriebswelle und zum anderen wird dadurch eine Beeinflussung der in der Führungshülse aufgenommenen Abtriebswelle des zweiten Messwerks durch die Hohlwelle des ersten Messwerks im montierten Zustand des gesamten Messwerks vermieden.

In gleicher Weise kann am Gehäuse des ersten Einzelmesswerks ein von der Hohlwelle durchgriffener Fixierbund vorgesehen sein, welcher zusätzlich zur Führung der Hohlwelle als Fixierhilfe bei der Montage des Messwerks auf einem Montageteil, vorzugsweise einer Träger- oder Leiterplatte, dient.

Nach der bevorzugten Ausführungsform der Erfindung sind aus dem Gehäuse des ersten und zweiten Einzelmesswerks elektrische Anschlusskontakte herausgeführt, wobei vorzugsweise die Anschlusskontakte des Gehäuses des einen Einzelmesswerks an dessen Außenseite und die Anschlusskontakte des anderen Einzelmesswerks an dessen Innenseite (jeweils bezogen auf den Montagezustand der Einzelmesswerke) herausgeführt sind und wobei letztere Anschlusskontakte so lang ausgebildet sind, dass sie sich bis in den Bereich der Anschlusskontakte des einen Einzelmesswerks erstrecken. Hierdurch ergibt sich der Vorteil, dass nach der Montage der beiden Einzelmesswerke zu einem gesamten Messwerk das gesamte Messwerk von einer Seite her kontaktier werden kann.

Nach einer Ausführungsform der Erfindung weisen das erste und zweite Einzelmesswerk an ihren Gehäusen Verbindungsmittel auf, mit welchen die Einzelmesswerke zu dein gesamten Messwerk verbunden sind. Die Verbindungsmittel können dabei als Rastmittel ausgebildet sein.

Selbstverständlich können die Einzelmesswerke jedoch auch mittels Schrauben oder durch Verpressen oder dergleichen verbunden sein. Darüber hinaus ist denkbar, die beiden Einzelmesswerke zunächst nur durch das Ineinanderschieben der beiden Abtriebswellen zu verbinden und dann diese Kombination der beiden Einzelmesswerke durch Schrauben, Halteklammern oder dergleichen mit einem Montageteil, beispielsweise der Leiterplatte eines Kombiinstruments, zu verbinden.

Hierbei können auch ein oder mehrere Anschlusskontakte des einen Einzelmesswerks das Gehäuse des anderen Einzelmesswerks durchgreifen und die Position der Messwerke auf diese Weise fixieren.

Nach einer weiteren Ausführungsform der Erfindung kann das Messwerk ein Trägerteil umfassen, in welchem das erste und zweite Einzelmesswerk, vorzugsweise in separaten Befestigungsausnehmungen, aufgenommen sind.

Bei dieser Ausführungsform der Erfindung kann die am zweiten Einzelmesswerk vorgesehene Führungshülse das Trägerteil durchgreifen und vorzugsweise durch das Gehäuse des ersten Einzelmesswerks in die als Hohlwelle ausgebildete Abtriebswelle des ersten Einzelmesswerks eingreifen. Hierdurch ergibt sich der Vorteil, dass das zweite Einzelmesswerk mittels der Führungshülse im Trägerteil fixiert wird und gleichzeitig die Führungshülse als (zusätzliche) Führung für die Hohlwelle dient.

Selbstverständlich kann auch bei den vorgenannten Ausführungsformen ohne Trägerteil die Führungshülse des zweiten Einzelmesswerks zu diesem Zweck in entsprechender Weise in die Hohlwelle des ersten Einzelmesswerks eingreifen. Zusätzlich kann die Führungshülse durch eine entsprechende Durchgangsöffnung im Gehäuse des ersten Einzelmesswerks eine Fixierung der Einzelmesswerke zueinander bewirken.

Bei der Ausführungsform der Erfindung, in welcher ein Trägerteil für die Einzelmesswerke vorgesehen ist, sind vorzugsweise an den Gehäusen des ersten und/oder zweiten Einzelmesswerks erste Rastmittel vorgesehen, welche mit im Trägerteil ausgebildeten zweiten Rastmitteln zur Halterung und Fixierung der Einzelmesswerke zusammenwirken. Hierdurch ergibt sich der Vorteil einer einfachen Montage des Messwerks.

Das Trägerteil kann seinerseits erste Verbindungsmittel aufweisen, welche mit auf einem Montageteil vorgesehenen zweiten Verbindungsmitteln zum Fixieren und Halten des Messwerks zusammenwirken. Diese Verbindungsmittel können ebenfalls als Rastmittel oder als Schraubverbindungen oder Verpressverbindungen (das Messwerk bzw. Montageelement durchgreifen Montagestifte und verpressen die Stiftenden) ausgebildet sein.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine perspektivische Explosionsdarstellung eines Messwerks nach der Erfindung;
- Fig. 2: einen Ausschnitt eines Schnitts durch das Messwerk in Fig. 1 in einer Ebene durch die Abtriebswellen und
- Fig. 3: eine schematische Darstellung eines Kombiinstruments für ein KFZ mit mehreren Messwerken nach Fig. 1.

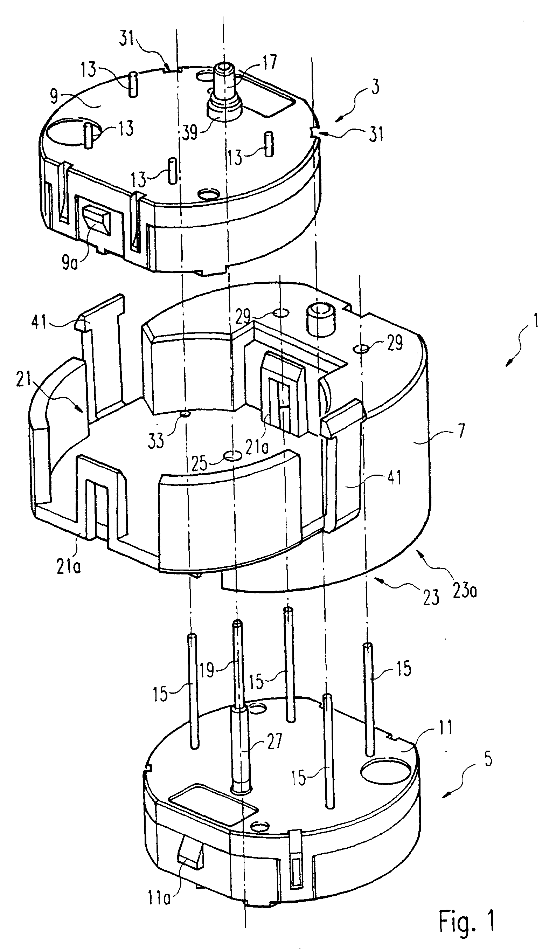

Das in Fig. 1 dargestellte Messwerk 1 umfasst ein erstes Einzelmesswerk 3, ein zweites Einzelmesswerk 5 und ein Trägerteil 7, welches zur Halterung und Montage der Einzelmesswerke 3, 5 zu dein gesamten Messwerk 1 dient.

Die Einzelmesswerke 3, 5 umfassen ein Gehäuse 9, 11 sowie jeweils einen in dem Gehäuse 9 bzw. 11 angeordneten, nicht näher dargestellten Antrieb. Der Antrieb kann beispielsweise als Schrittmotor ausgebildet sein.

Damit kann jedes der Einzelmesswerke 3, 5, abgesehen von den nachfolgend erläuterten speziellen Merkmalen, in an sich bekannter Weise ausgebildet sein. Für die Herstellung des erfindungsgemäßen Doppelmesswerks mit koaxialen Achsen kann somit auf an sich bekannte Einzelmesswerke zurückgegriffen werden, die lediglich in relativ geringem Umfang abgeändert werden müssen.

Aus jedem Gehäuse 9, 11 der Einzelmesswerke 3, 5 ragen stiftförmig ausgebildete Anschlusskontakte 13, 15, über die der betreffende Antrieb jeweils unabhängig vom anderen Antrieb elektrisch ansteuerbar ist.

Des Weiteren ist aus jedem Gehäuse 9, 11 der Einzelmesswerke 3, 5 die Abtriebswelle 17, 19 des jeweiligen Antriebs herausgeführt. Jedes Ende der Abtriebswellen 17, 19 ist mit einem separaten Anzeigeelement, beispielsweise in Form eines Zeigers, verbindbar.

Bei der in Fig. 1 dargestellten Ausführungsform ist die Abtriebswelle 17 des ersten Einzelmesswerks als hohle Abtriebswelle ausgeführt, die Abtriebswelle 19 des zweiten Einzelmesswerks dagegen als Vollwelle.

Das Trägerteil 7 weist Montageausnehmungen 21, 23 für die Einzelmesswerke 3, 5 auf. Für das Fixieren und Halten jedes der Einzelmesswerke 3, 5 sind an den Gehäusen 9, 11 der Einzelmesswerke Rastvorsprünge 9a, 11a vorgesehen, die in als Federbügel ausgebildete Gegenrasten 21a, 23a in den Bereichen der Montageausnehmungen 21, 23 des Trägerteils 7 eingreifen.

Das Trägerteil 7 weist eine Durchgangsbohrung 25 auf, durch welche die Abtriebswelle 19 bzw. eine am Gehäuse 11 des zweiten Einzelmesswerks vorgesehene Führungshülse 27 hindurchgeführt werden kann. Die Führungshülse 27 dient dabei einerseits zur Führung und Stabilisierung der Abtriebswelle 19 und zum anderen zur Fixierung des zweiten Einzelmesswerks 5 in der Montageausnehmung des Trägerteils 7.

Zur Montage der Einzelkomponenten des Messwerks 1 zu einem gesamten Messwerk müssen somit lediglich die beiden Einzelmesswerte 3, 5 in die Montageausnehmungen 21, 23 des Trägerteils 7 eingesetzt und darin verrastet werden.

Bei der in Fig. 1 dargestellten Ausführungsform der Erfindung sind die Anschlusskontakte des zweiten Einzelmesswerks 5 an der Innenseite (bezogen auf den späteren Montagezustand) des Gehäuses 11 herausgeführt und so lang ausgebildet, dass sie nach der Montage der einzelnen Komponenten im Wesentlichen mit den Anschlusskontakten 13 des ersten Einzelmesswerks fluchten, die an der Außenseite (bezogen auf den Montagezustand) des Gehäuses 9 herausgeführt sind.

Bei dein in Fig. 1 dargestellten Ausführungsbeispiel ist das Trägerteil 7 so ausgebildet, dass die Montageausnehmungen 21, 23 an der Oberseite bzw. Unterseite des Trägerteils 7 in radialer Richtung zueinander versetzt sind. Die Einzelmesswerke 3, werden in die Montageausnehmungen 21, 23 um 180° gegeneinander verdreht eingesetzt. Dies hat den Vorteil, dass die Anschlusskontakte 13, 15 der beiden Einzelmesswerke 3, 5 an jeweils der selben Position vorgesehen sein können, ohne dass bei einem Durchgreifen des Trägerteils 7 und des Einzelmesswerks 3 durch die länger ausgebildeten Anschlusskontakte 15 des zweiten Einzelmesswerks 5 Probleme auftreten. Hierzu sind im Trägerteil 7 Durchgriffsöffnungen 29 für die beiden in Fig. 1 rückwärtig dargestellten Anschlusskontakte 15 und in der Gehäusewandung des ersten Einzelmesswerks 3 Ausnehmungen 31 für die beiden in Fig. 1 dargestellten vorderen Anschlusskontakte des zweiten Einzelmesswerks 5 vorgesehen. Selbstverständlich müssen für die vorderen Anschlusskontakte 15 im Boden der Montageausnehmung 21 auch entsprechende Durchgangsöffnungen 33 vorgesehen sein.

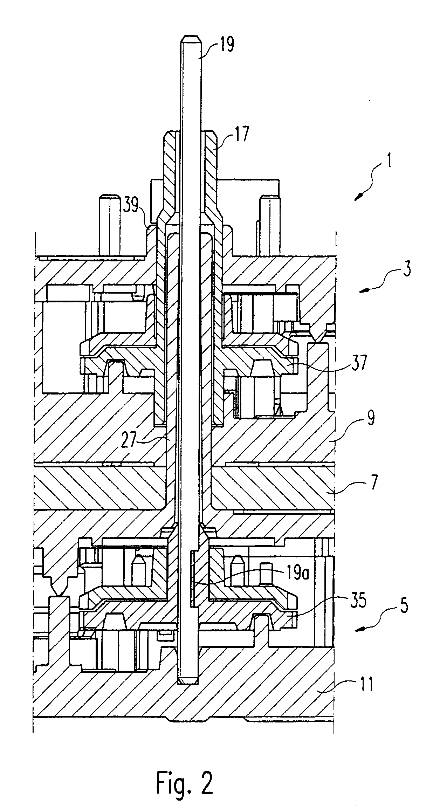

Fig. 2 zeigt einen Ausschnitt eines Schnitts durch das fertig montierte Doppelmesswerk gemäß Fig. 1. Wie aus dieser Darstellung ersichtlich, wird die Abtriebswelle 19 des zweiten Messwerks 5 mittels eines Ritzels 35 angetrieben, welches als Teil eines im Übrigen nicht näher dargestellten Getriebes mit einem ebenfalls nicht dargestellten Schrittmotor gekoppelt ist. Das Ritzel 35 ist unmittelbar auf die Abtriebswelle 19 aufgespritzt, wobei eine Ausnehmung 19a einen drehfesten Sitz des Ritzels 35 gewährleistet. Die Führungshülse 27, welche am Gehäuse 11 des zweiten Einzelmesswerks 5 vorgesehen ist, durchgreift die Durchgangsbohrung bzw. Durchgangsöffnung 25 im Trägerteil 7 und ragt bis in die mit einem entsprechenden Durchmesser versehene Hohlwelle 17 des ersten Einzelmesswerks 3. Die Hohlwelle 17 ist einstückig mit einem Ritzel 37 ausgebildet, welches als Teil eines nicht näher dargestellten Getriebes von einem ebenfalls nicht dargestellten Schrittmotor des ersten Einzelmesswerks 3 angetrieben wird. Durch das Eingreifen der Führungshülse 27 in die Hohlwelle 17 ergibt sich der Vorteil, dass die Drehbewegung der Hohlwelle 17 sich nicht in nachteiliger Weise auf die Welle 19 übertragen kann bzw. sich die Wellen 17, 19 nicht nachteilig beeinflussen können.

Die Hohlwelle 17 ist mit ihrem Ende durch einen Fixierbund 39 an der Oberseite des Gehäuses 9 des ersten Einzelmesswerks 3 herausgeführt. Dieser Fixierbund 39 dient zum einen zur Führung der Hohlwelle 17 und kann zum anderen auch als Fixier- und Montagehilfe für das Montieren des Messwerks 1 in einem nicht näher dargestellten Montageteil, beispielsweise einer Platine eines Kombiinstruments, dienen.

Das obere Ende der Hohlwelle 17, welches über das obere Ende der Fixierhülse 27 hinausragt, ist in seinem Durchmesser reduziert, ohne dass sich jedoch die beiden Wellen 17, 19 (im Normalzustand) berühren. Auf dieses obere Ende der Hohlwelle 17 kann ein Anzeigeelement, beispielsweise in Form eines Zeigers, aufgesteckt werden. In entsprechender Weise kann auf dem über das Ende der Hohlwelle 17 hinausragende Ende der Vollwelle 19 ein weiteres Anzeigeelement fixiert werden.

Auf diese Weise ergibt sich ein einfach aufgebautes Doppelmesswerk, das im Wesentlichen unter der Verwendung geringfügig abgewandelter üblicher Einzelmesswerke unter Verwendung eines Trägerteils hergestellt werden kann. Die Montage der Komponenten erfordert lediglich zwei Arbeitsschritte und kann leicht automatisiert werden.

Die Montage des gesamten Messwerks 1 in bzw. auf einem Trägerteil kann beispielsweise dadurch erfolgen, dass, wie in Fig. 1 dargestellt, das Trägerteil 7 Rastzungen 41 aufweist, mit welchen das Messwerk in Gegenrasten, beispielsweise einfachen Ausnehmungen, im bzw. auf dem Montageteil verrastbar ist. Selbstverständlich kann das Messwerk 1 auch zusätzlich oder ausschließlich durch Schraubverbindungen oder andere Verbindungen mit dem Montageteil verbunden werden.

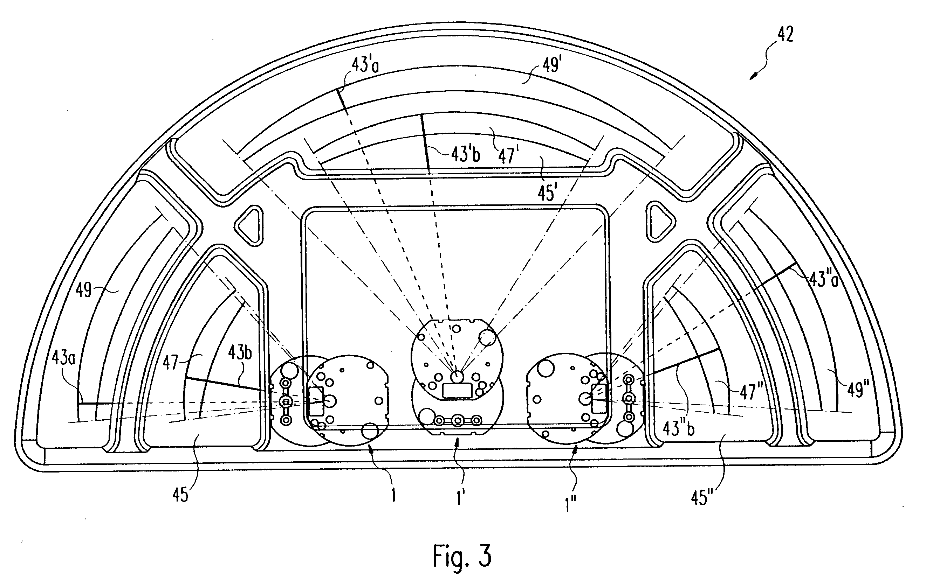

Zur Veranschaulichung eines Einsatzzwecks des in den Fig. 1 und 2 dargestellten Doppelmesswerks zeigt Fig. 3 eine schematische Darstellung eines Kombiinstruments für ein KFZ.

Das Kombiinstrument 42 umfasst insgesamt drei Messwerke 1, 1', 1" gemäß den Fig. 1 und 2.

Jedes der Doppelmesswerke 1, 1', 1'' ist mit jeweils zwei Zeigern 43a, 43b, 43'a, 43'b bzw. 43''a, 43''b verbunden. Der jeweils längere der beiden Zeiger ist unter einer Blende 45, 45', 45" hindurchgeführt, auf welcher jeweils eine Skala 47, 47', 47" für den jeweils durch den kürzeren Zeiger 43b, 43'b, 43"b darzustellenden Parameter vorgesehen ist.

In gleicher Weise sind unterhalb der längeren Zeiger 43a, 43'a, 43"a Blenden mit entsprechenden Skalen 49, 49', 49" zur Darstellung des betreffenden Parameters vorgesehen.

Unter Verwendung der erfindungsgemäßen Doppelmesswerke 1, 1', 1" ergibt sich somit ein äußerst einfacher und raumsparender Aufbau des Kombiinstruments 42.

## Patentansprüche

1. Messwerk, insbesondere für Anzeigeeinrichtungen in der KFZ-Technik,
a) mit mindestens einem ersten und einem zweiten unabhängig ansteuerbaren Antrieb mit jeweils einer Abtriebswelle (17, 19), welche mit jeweils einem Anzeigeelement drehfest verbindbar ist,
b) wobei die Abtriebswelle (19) des zweiten Antriebs koaxial durch die als Hohlwelle ausgebildete Abtriebswelle (17) des ersten Antriebs geführt ist und mit ihrem Ende über das Ende der als Hohlwelle ausgebildeten Abtriebswelle (17) hinausragt,
**dadurch gekennzeichnet,**
c) **dass** der erste Antrieb mit seiner Abtriebswelle (17) in einem separaten Gehäuse (9) als ein erstes Einzelmesswerk (3) und der zweite Antrieb mit seiner Abtriebswelle (19) in einem weiteren separaten Gehäuse (11) als ein zweites Einzelmesswerk (5) ausgebildet sind, wobei die Abtriebswelle (17, 19) des betreffenden Antriebs aus dem Gehäuse (9, 11) herausgeführt ist, und
d) **dass** das erste (3) und zweite (5) Einzelmesswerk zu einem gesamten Messwerk (1) verbunden sind.

2. Messwerk nach Anspruch 1, **dadurch gekennzeichnet, dass** das erste (3) und zweite (5) Einzelmesswerk bis auf die Ausbildung der Abtriebswellen (17, 19) und hiervon beeinflusste Teile oder Bereiche im Wesentlichen identisch ausgebildet sind.

3. Messwerk nach einem der vorhergehenden Ansprüche, **dadurch gekennzeichnet, dass** am Gehäuse (11) des zweiten Einzelmesswerks (5) eine mit dem Gehäuse verbundene Führungshülse (27) für die Abtriebswelle (19) vorgesehen ist.

4. Messwerk nach einem der vorhergehenden Ansprüche, **dadurch gekennzeichnet, dass** am Gehäuse (9) des ersten Einzelmesswerks (3) ein von der Hohlwelle (17) durchgriffener Fixierbund (39) vorgesehen ist, welcher gleichzeitig als Fixierhilfe bei der Montage des Messwerks (1) auf einem Montageteil, vorzugsweise einer Träger- oder Leiterplatte, dient.

5. Messwerk nach einem der vorhergehenden Ansprüche, **dadurch gekennzeichnet, dass** aus dem Gehäuse (9, 11) des ersten und zweiten Einzelmesswerks (3, 5) elektrische Anschlusskontakte (13, 15) herausgeführt sind, wobei-bezogen auf den Montagezustand der Einzelmesswerke-vorzugsweise die Anschlusskontakte (13) des Gehäuses (9) des einen Einzelmesswerks (3) an dessen Außenseite und die Anschlusskontakte (15) des anderen Einzelmesswerks (5) an dessen Innenseite herausgeführt sind und letztere Anschlusskontakte (15) so lang ausgebildet sind, dass sie sich bis in den Bereich der Anschlusskontakte (13) des einen Einzelmesswerks (13) erstrecken.

6. Messwerk nach einem der vorhergehenden Ansprüche, **dadurch gekennzeichnet, dass** das erste (3) und zweite (5) Einzelmesswerk an ihren Gehäusen (9, 11) Verbindungsmittel aufweisen, mit welchen die Einzelmesswerke zu dem gesamten Messwerk (1) verbunden sind.

7. Messwerk nach Anspruch 6, **dadurch gekennzeichnet, dass** die Verbindungsmittel als Rastmittel ausgebildet sind.

8. Messwerk nach einem der Ansprüche 5 bis 7, **dadurch gekennzeichnet, dass** ein oder mehrere Anschlusskontakte des einen Einzelmesswerks das andere Einzelmesswerk durchgreifen.

9. Messwerk nach einem der Ansprüche 3 bis 8, **dadurch gekennzeichnet, dass** die am zweiten Einzelmesswerk vorgesehene Führungshülse in das Gehäuse des ersten Einzelmesswerks und vorzugsweise auch in die als Hohlwelle ausgebildete Abtriebswelle des ersten Einzelmesswerks eingreift.

10. Messwerk nach einem der Ansprüche 1 bis 5, **dadurch gekennzeichnet, dass** ein Trägerteil (7) vorgesehen ist, in welchem das erste (3) und zweite (5) Einzelmesswerk, vorzugsweise in separaten Montageausnehmungen (21, 23), aufgenommen sind.

11. Messwerk nach Anspruch 10, **dadurch gekennzeichnet, dass** die am zweiten Einzelmesswerk (5) vorgesehene Führungshülse (27) das Trägerteil (7) durchgreift und vorzugsweise durch das Gehäuse (9) des ersten Einzelmesswerks (3) in die als Hohlwelle ausgebildete Abtriebswelle (17) des ersten Einzelmesswerks (3) eingreift.

12. Messwerk nach Anspruch 10 oder 11, **dadurch gekennzeichnet, dass** ein oder mehrere der längeren, an der Innenseite des betreffenden Einzelmesswerks (5) herausgeführten Anschlusskontakte (15) das Trägerteil (7) und/oder das jeweils andere Einzelmesswerk (3) durchgreifen.

13. Messwerk nach einem der Ansprüche 10 bis 12, **dadurch gekennzeichnet, dass** an den Gehäusen (9, 11) des ersten und/oder zweiten Einzelmesswerks (3, 5) erste Rastmittel (9a, 11a) vorgesehen sind, welche mit im Trägerteil (7) ausgebildeten zweiten Rastmitteln (21a, 23a) zur Halterung und Fixierung der Einzelmesswerke (3, 5) zusammenwirken.

14. Messwerk nach einem der Ansprüche 10 bis 13, **dadurch gekennzeichnet, dass** das Trägerteil (7) erste Verbindungsmittel (41) aufweist, welche mit auf einem Montageteil vorgesehenen zweiten Verbindungsmitteln zum Fixieren Halten des Messwerks (1) zusammenwirken.

## Claims

1. Measuring mechanism, in particular for display devices in motor vehicle equipment,
a) having at least a first and a second drive which can be driven independently and which each have an output shaft (17, 19) which can each be connected fixed in terms of rotation to a display element,
b) the output shaft (19) of the second drive extending coaxially through the output shaft (17), constructed as a hollow shaft, of the first drive and projecting with its end beyond the end of the output shaft (17) constructed as a hollow shaft, characterized
c) in that the first drive is constructed with its output shaft (17) in a separate housing (9) as a first individual measuring mechanism (7), and the second drive is constructed with its output shaft (19) in a further separate housing (11) as a second individual measuring mechanism (5), the output shaft (17, 19) of the respective drive extending out of the housing (9, 11), and
d) in that the first individual measuring mechanism (3) and second individual measuring mechanism (5) are connected to form a common measuring mechanism (1).

2. Measuring mechanism according to Claim 1, **characterized in that** the first individual measuring mechanism (3) and second individual measuring mechanism (5) are of essentially identical construction with the exception of the construction of the output shafts (17, 19) and parts or regions affected thereby.

3. Measuring mechanism according to one of the preceding claims, **characterized in that** a guide sleeve (27), connected to the housing, for the output shaft (19) is provided on the housing (11) of the second individual measuring mechanism (5).

4. Measuring mechanism according to one of the preceding claims, **characterized in that** a locking collar (39) through which the hollow shaft (17) engages and which serves simultaneously as a locking aid when mounting the measuring mechanism (1) on a mounting part, preferably a carrier plate or printed circuit board is provided on the housing (9) of the first individual measuring mechanism (3).

5. Measuring mechanism according to one of the preceding claims, **characterized in that** electrical connecting contacts (13, 15) are led out of the housing (9, 11) of the first and second individual measuring mechanisms (3, 5), in which case, referring to the mounted state of the individual measuring mechanisms, the connecting contacts (13) of the housing (9) of the one individual measuring mechanism (3) are preferably led out at its outer side and the connecting contacts (15) of the other individual measuring mechanism (5) are preferably led out at its inner side, and the latter connecting contacts (15) are constructed with such a length that they extend into the region of the connecting contacts (13) of the one individual measuring mechanism (3).

6. Measuring mechanism according to one of the preceding claims, **characterized in that** the first individual measuring mechanism (3) and second individual measuring mechanism (5) have, on their housings (9, 11), connecting means with which the individual measuring mechanisms are connected to form the entire measuring mechanism (1).

7. Measuring mechanism according to Claim 6, **characterized in that** the connecting means are constructed as latching means.

8. Measuring mechanism according to one of Claims 5 to 7, **characterized in that** one or more connecting contacts of the one individual measuring mechanism engage through the other individual measuring mechanism.

9. Measuring mechanism according to one of Claims 3 to 8, **characterized in that** the guide sleeve provided on the second individual measuring mechanism engages in the housing of the first individual measuring mechanism, and preferably also in the output shaft, constructed as a hollow shaft, of the first individual measuring mechanism.

10. Measuring mechanism according to one of Claims 1 to 5, **characterized in that** a carrier part (7) is provided in which the first individual measuring mechanism (3) and second individual measuring mechanism (5) are preferably received in separate mounting recesses (21, 23).

11. Measuring mechanism according to Claim 10, **characterized in that** the guide sleeve (27) provided on the second individual measuring mechanism (5) engages through the carrier part (7), and preferably engages in the output shaft (17), constructed as a hollow shaft, of the first individual measuring mechanism (3) through the housing (9) of the first individual measuring mechanism (3).

12. Measuring mechanism according to Claim 10 or 11, **characterized in that** one or more of the longer connecting contacts (15), led out at the inner side of the respective individual measuring mechanism (5) engage(s) through the carrier part (7) and/or the respective other individual measuring mechanism (3).

13. Measuring mechanism according to one of Claims 10 to 12, **characterized in that** first latching means (9a, 11a), which interact with second latching means (21a, 23a) which are constructed in the carrier part (7) and have the purpose of securing and locking the individual measuring mechanisms (3, 5), are provided on the housings (9, 11) of the first and/or second individual measuring mechanisms (3, 5).

14. Measuring mechanism according to one of Claims 10 to 13, **characterized in that** the carrier part (7) has first connecting means (41) which interact with second connecting means which are provided on a mounting part and have the purpose of locking/securing the measuring mechanism (1).

## Revendications

1. Unité de mesure notamment pour des dispositifs d'affichage dans la technique automobile,
a) comportant au moins des premier et second dispositifs d'entraînement pour être commandés de façon indépendante et comportant chacun un arbre mené (17, 19), qui peut être relié solidairement en rotation à un élément d'affichage respectif,
b) dans lequel l'arbre mené (19) du second dispositif d'entraînement est guidé coaxialement par l'arbre mené (17) agencé sous la forme d'un arbre creux, du premier dispositif d'entraînement et fait saillie, par son extrémité, au-delà de l'extrémité de l'arbre mené (17) agencé sous la forme d'un arbre creux,
caractérisée en ce
c) que le premier dispositif d'entraînement équipé de son arbre mené (17) est agencé, dans un boîtier séparé (9), en tant que première unité de mesure individuelle (3) et que le second dispositif d'entraînement équipé de son arbre mené (19) est agencé, dans un autre boîtier séparé (11), en tant que seconde unité de mesure individuelle (5), l'arbre mené (17, 19) du dispositif d'entraînement respectif ressortant du boîtier (9, 11),
d) que la première unité de mesure individuelle (3) et la seconde unité de mesure individuelle (5) sont reliées pour former une unité de mesure complète (1).

2. Unité de mesure selon la revendication 1, **caractérisée en ce que** la première unité de mesure individuelle (3) et la seconde unité de mesure individuelle (5) sont agencées de manière à être essentiellement identiques hormis en ce qui concerne la forme de réalisation des arbres menés (17, 19) et des parties ou zones, qui sont influencées par ces arbres.

3. Unité de mesure selon les revendications précédentes, **caractérisée en ce qu'**une douille de guidage (27) reliée au boîtier pour l'arbre mené (19) est prévu sur le boîtier (11) de la seconde unité de mesure individuelle (5).

4. Unité de mesure selon l'une des revendications précédentes, **caractérisée en ce que** sur le boîtier (11) de la première unité de mesure individuelle (3) est prévu un collet de fixation (39), qui est traversé par l'arbre creux (17) et qui sert simultanément de système auxiliaire de fixation lors du montage de l'unité de mesure (1) sur une partie de montage, de préférence, une plaque de support ou une plaquette à circuits imprimés.

5. Unité de mesure selon l'une des revendications précédentes, **caractérisée en ce que** des contacts électriques de raccordement (13, 15) ressortent du boîtier (9, 11) des première et seconde unités de mesure individuelle (3, 5), et les contacts de raccordement (13) du boîtier (9) d'une unité de mesure individuelle (3) ressortent sur le côté extérieur de cette unité et les contacts de raccordement (15) de l'autre unité de mesure individuelle (5) ressortent sur le côté intérieur de cette unité - d'une manière rapportée à l'état de montage des unités de mesure individuelles -, et que les contacts de raccordement (15) indiqués en dernier lieu sont agencés avec une longueur telle qu'ils s'étendent jusque dans la zone des contacts de raccordement (13) d'une unité de mesure individuelle (13).

6. Unité de mesure selon l'une des revendications précédentes, **caractérisée en ce que** la première unité de mesure individuelle (3) et la seconde unité de mesure individuelle (5) comportent, sur leurs boîtiers (9, 11), des moyens de liaison, à l'aide desquels les unités de mesure individuelles sont reliées pour former l'ensemble de l'unité de mesure (1).

7. Unité de mesure selon la revendication 6,
**caractérisée en ce que** les moyens de liaison sont agencés sous la forme de moyens d'encliquetage.

8. Unité de mesure selon l'une des revendications 5 à 7, **caractérisée en ce qu'**un ou plusieurs contacts de raccordement d'une unité de mesure individuelle traversent l'autre unité de mesure individuelle.

9. Unité de mesure selon l'une des revendications 3 à 8, **caractérisée en ce que** la douille de guidage, qui est prévue sur la seconde unité de mesure individuelle, s'engage dans le boîtier de la première unité de mesure individuelle et de préférence également dans l'arbre mené, agencé sous la forme d'un arbre creux, de la première unité de mesure individuelle.

10. Unité de mesure selon l'une des revendications 1 à 5, **caractérisée en ce qu'**il est prévu une partie support (7), dans laquelle la première unité de mesure individuelle (3) et la seconde unité de mesure individuelle (5) sont logées, de préférence dans des évidements séparés de montage (21, 23).

11. Unité de mesure selon la revendication 10, **caractérisée en ce que** la douille de guidage (27) prévue sur la seconde unité de mesure individuelle (5) traverse la partie de support (7) et s'engage, de préférence à travers le boîtier (9) de la première unité de mesure individuelle (3), dans l'arbre mené (17) agencé sous la forme d'un arbre creux de la première unité de mesure individuelle (3).

12. Unité de mesure selon la revendication 10 ou 11, **caractérisée en ce qu'**un ou plusieurs des contacts de raccordement les plus longs (15), qui ressortent sur le côté intérieur de l'unité de mesure individuelle considérée (5), traversent la partie de support (7) et/ou l'autre unité de mesure individuelle respective (3).

13. Unité de mesure selon l'une des revendications 10 à 12, **caractérisée en ce que** sur les boîtiers (9, 11) de la première et/ou de la seconde unité de mesure individuelle (3, 5) sont prévus des moyens d'encliquetage (9a, 11a), qui coopèrent avec des seconds moyens d'encliquetage (21a, 23a), formés dans la partie de support (7), pour retenir et fixer les unités de mesure individuelles (3, 5).

14. Unité de mesure selon l'une des revendications 10 à 13, **caractérisée en ce que** la partie de support (7) possède les premiers moyens de liaison (41), qui coopèrent avec des seconds moyens de liaison prévus sur une partie de montage, pour fixer/retenir l'unité de mesure (1).
